# EUROPEAN PATENT APPLICATION

(11) **EP 1 514 899 A1**
(43) Date of publication of application: **16.03.2005**
(21) Application number: 04104059.3
(22) Date of filing: 24.08.2004
(51) Int. Cl.: C08L 9/00

(54) **Tire with at least one of sidewall insert and/or apex of a rubber composition which contains a high vinyl polybutadiene**

(30) Priority: 02.09.2003 US 653531
(71) Applicant: THE GOODYEAR TIRE & RUBBER COMPANY, Akron, Ohio 44316-0001 (US)
(72) Inventor: D'Sidocky, Richard Michael, Ravenna, Ohio 44266 (US); Bezilla, Bernard Matthew, Jr, Stow, Ohio 44224 (US); Benko, David Andrew, Munroe Falls, Ohio 44262 (US); Halasa, Adel Farhan, Bath, Ohio 44210 (US); Hsu, Wen-Liang, Cuyahoga Falls, Ohio 44223 (US); Deevers, Susan Lynn, Clinton, Ohio 44216 (US); Puhala, Aaron Scott, Kent, Ohio 44240 (US); Burlett, Donald James, Wadsworth, Ohio 44281 (US)
(74) Representative: Kutsch, Bernd

(57) **Abstract**

This invention relates to a tire with a sidewall insert and/or apex of a rubber composition which contains a high vinyl polybutadiene elastomer.

## Description

### Field of the Invention

This invention relates to a tire with a sidewall insert and/or apex of a rubber composition which contains a high vinyl polybutadiene elastomer.

### Background of the Invention

Pneumatic tires conventionally contain a relatively hard rubber sidewall insert in the nature of an apex as an insert within a tire's sidewall adjacent to, and usually juxtapositioned to, a tire's bead portion to aid in controlling the stiffness of the tire's sidewall.

For some tires, particularly tires which are intended to be able to run with only atmospheric air pressure within the pneumatic tire cavity, a relatively hard rubber insert is positioned in the tire sidewall which may be spaced apart from the bead portions in order to add support as well as stiffness to the tire sidewall.

However, such additional sidewall rubber inserts usually add weight to the tire in order to accomplish such objectives.

Also, such insert-containing sidewall, because of a usual inherent increased thickness of the sidewall itself may result in an inherent increase in heat generation is typically experienced which results in an increased running temperature for the tire sidewall during its operation of moving its associated vehicle.

The invention relates to use of an inclusion of a high vinyl polybutadiene elastomer in such rubber sidewall insert rubber composition which is observed to reduce heat generation within the rubber insert while substantially maintaining its stiffness as the running temperature of the tire sidewall and associated sidewall insert increases.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured", unless otherwise indicated. The term "Tg" refers to glass transition temperature determined by DSC (differential scanning calorimeter) at a rate of temperature rise of 10°C per minute, well known by those having skill in such art. (ASTM D3418-99)

### Summary and Practice of the Invention

The invention relates to a tire according to claim 1. Subclaims relate to preferred embodiment of the invention.

Preferably, the rubber composition for said apex and sidewall insert is comprised of, based upon parts by weight of an ingredient per 100 parts by weight elastomer (phr):
(A) 60 to 80 phr of at least one diene based elastomer, and/or
(B) 20 to 40 phr of high vinyl polybutadiene elastomer which has a vinyl 1,2- content in a range of 40 to 80 percent and, more preferably, also a Tg in a range of from -10°C to -30°C; and/or
(C) 25 to 90 phr of at least one reinforcing particulate filler selected from carbon black, aggregates of synthetic amorphous silica (preferably a precipitated silica) and silica-containing carbon having domains of silica on its surface.

The coupling agents may include, for example, bis(3-trialkoxysilylalkyl) polysulfides, such as, for example, a bis(3-triethoxysilylpropyl) polysulfide, (which may sometimes be referred to as, for example, a 3,3'-bis(triethoxysilylpropyl) polysulfide), preferably having an average of from 2 to 2.6 (substantially a disulfide) or from 3.5 to 4 (substantially a tetrasulfide), connecting sulfur atoms in its polysulfidic bridge. Often the bis (3-triethoxysilylpropyl) polysulfide preferably has an average of from 2 to 2.6 connecting sulfur atoms in its polysulfidic bridge.

It is be appreciated that if the reinforcing particulate filler is carbon black, (without the amorphous silica and/or silica-containing carbon black), the rubber composition for the respective sidewall insert is preferably exclusive of the coupling agent.

The high vinyl polybutadiene elastomer preferably has a microstructure comprised of said 1,2- vinyl content in a range of from 50 to 90 percent. A representative high vinyl polybutadiene elastomer is normally considered herein to have, for example, a cis 1,4-content in a range of 10 to 50 percent.

A high vinyl polybutadiene may be prepared, for example, as described in US-A- 6,140,434.

A significant aspect of the use of the high vinyl polybutadiene elastomer for the sidewall insert of this invention is maintenance of low heat buildup and stiffness properties.

This is considered herein to be significant because loss in stiffness of the rubber composition, and therefore the insert of such rubber composition, contributes to an unwanted greater heat buildup and reduced heat durability.

In practice, various other diene-based elastomers may be used in conjunction with the high vinyl polybutadiene for the tire sidewall insert rubber composition such as, for example, polymers of isoprene and/or 1,3-butadiene and copolymers of styrene with isoprene and/or 1,3-butadiene.

Representative of such other diene-based elastomers are, for example, cis 1,4-polyisoprene (natural and synthetic), cis 1,4-polybutadiene, styrene/butadiene copolymers (aqueous emulsion polymerization prepared and organic solvent solution polymerization prepared), isoprene/butadiene copolymers, styrene/isoprene/butadiene terpolymers. Tin coupled elastomers may also be used, such as, for example, tin coupled organic solution polymerization prepared styrene/butadiene co-polymers, isoprene/butadiene copolymers, styrene/isoprene copolymers, polybutadiene and styrene/isoprene/butadiene terpolymers.

In the further practice of this invention, particulate reinforcement for the rubber composition may also include aggregates of synthetic amorphous silica, or a combination of carbon black and such precipitated silica, usually of an amount in a range of 35 to 100 alternately 35 to 90, phr. If a combination of such carbon black and precipitated silica is used, usually at least 5 phr of carbon black and at least 10 phr of silica are used. For example, a weight ratio of silica to carbon black ranging from 1/5 to 5/1 might be used.

The precipitated silica aggregates preferably employed in this invention are precipitated silicas such as, for example, those obtained by the acidification of a soluble silicate, e.g., sodium silicate and may include coprecipitated silica and a minor amount of aluminum.

Such silicas might usually be characterized, for example, by having a BET surface area, as measured using nitrogen gas, preferably in the range of about 40 to about 600, and more usually in a range of about 50 to about 300 square meters per gram. The BET method of measuring surface area is described in the Journal of the American Chemical Society, Volume 60, Page 304 (1930).

The silica may also be typically characterized by having a dibutylphthalate (DBP) absorption value in a range of 50 to 400 cm³/100g, and more usually 100 to 300 cm³/100g.

Various commercially available precipitated silicas may be considered for use in this invention such as, only for example herein, and without limitation, silicas from PPG Industries under the Hi-Sil trademark with designations Hi-Sil 210, Hi-Sil 243, etc; silicas from Rhodia as, for example, Zeosil 1165MP and Zeosil 165GR, silicas from Degussa AG with, for example, designations VN2 and VN3, as well as other grades of silica, particularly precipitated silicas, which can be used for elastomer reinforcement.

For the coupling agent, for example, a bis(3-trialkoxysilylalkyl) polysulfide having an average of 2 to 2.6 or of 3.5 to 4 connecting sulfur atoms in its polysulfide bridge may be used such as for example a bis(3-triethoxysilylpropyl) polysulfide.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, comprise 0.5 to 10 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 1 to 10 phr. Typical amounts of waxes comprise 1 to 5 phr. Typical amounts of peptizers comprise 0.1 to 1 phr.

The vulcanization is conducted in the presence of a sulfur vulcanizing agent. Examples of suitable sulfur vulcanizing agents include elemental sulfur (free sulfur) or sulfur donating vulcanizing agents. Sulfur vulcanizing agents are usually used in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4 phr. In another embodiment, combinations of a primary and a secondary accelerator might be used with the secondary accelerator being used in smaller amounts (of about 0.05 to about 3 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Preferably, the primary accelerator is a sulfenamide or sulfenimide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, and fillers such as silica and silica treated carbon black and adhesive agent, are mixed in one or more non-productive mix stages.

The following examples are presented to illustrate the invention and are not intended to be limiting. The parts and percentages are by weight unless otherwise designated.

### EXAMPLE I

A series of rubber based compositions were prepared which are referred to herein as Samples A through F, with Sample A and Sample C being Control Samples.

In particular, Control Sample A and Sample B contained a small amount of silica reinforcement together with a silica coupler.

In particular, Control Sample C and Samples D through F did not contain silica reinforcement or silica coupler.

Both of Control Samples A and C were prepared without addition of high vinyl polybutadiene (HVPBd) elastomer whereas all of Samples B, D, E, and F contained various amounts of HVPBd elastomer. The HVPBd elastomer had a vinyl 1,2-content of about 77 percent.

For this Example, in what is usually referred as a non-productive mixing stage or procedure, the Samples were prepared by first adding the ingredients (other than sulfur curative and vulcanization accelerators) in an internal rubber mixer for 4.5 minutes to a temperature of 160°C at which time the mixture was dumped from the mixer, open roll milled, sheeted out, and allowed to cool to below 40°C.

The resulting mixture, in which is usually referred to as a productive mixing stage of procedure, was then mixed with sulfur and vulcanization accelerators in an internal rubber for 2.5 minutes to a temperature of 110°C at which time the resulting mixture was dumped from the mixture, open roll milled, sheeted out, and allowed to cool to below 40°C.

Compositions of Samples are represented in the following Table 1.

**Table 1**

| | Samples | | | | | |
|---|---|---|---|---|---|---|
| | Control | | Control | | | |
| Material | A | B | C | D | E | F |
| First Non-Productive Mixing Step | | | | | | |
| Isoprene/butadiene¹ | 0 | 0 | 36.75 | 36.75 | 36.75 | 36.75 |
| Cis 1,4 polybutadiene rubber² | 20 | 20 | 36.75 | 36.75 | 18.5 | 0 |
| Natural cis 1,4-polyisoprene rubber | 80 | 40 | 26.5 | 6.5 | 26.5 | 26.5 |
| HVPBD³ | 0 | 40 | 0 | 20 | 18.25 | 36.75 |
| Processing oil | 4 | 4 | 0 | 0 | 0 | 0 |
| Stearic acid | 0 | 0 | 1 | 1 | 1 | 1 |
| Dithiodipropionic acid | 1.5 | 1.5 | 0 | 0 | 0 | 0 |
| Phenol formaldehyde resin | 2 | 2 | 0 | 0 | 0 | 0 |
| Tall oil fatty acid | 1 | 1 | 0 | 0 | 0 | 0 |
| Antidegradants | 3.25 | 3.25 | 4 | 4 | 4 | 4 |
| Zinc oxide | 6 | 6 | 0 | 0 | 0 | 0 |
| N550 carbon black | 0 | 0 | 56 | 56 | 56 | 56 |
| N660 carbon black | 60 | 60 | 0 | 0 | 0 | 0 |

| Second Non-Productive Mixing Step | | | | | | |
|---|---|---|---|---|---|---|
| Silica⁴ | 5 | 5 | 0 | 0 | 0 | 0 |
| Coupling agent⁵ | 1 | 1 | 0 | 0 | 0 | 0 |

| Productive Mixing Step | | | | | | |
|---|---|---|---|---|---|---|
| Anti-reversion agent⁶ | 2 | 2 | 0 | 0 | 0 | 0 |
| Curative package | 2.5 | 2.5 | 7.3 | 7.3 | 7.3 | 7.3 |
| Sulfur | 2 | 2 | 5 | 5 | 5 | 5 |
| Zinc oxide | 4 | 4 | 5 | 5 | 5 | 5 |

| | | | | | | |
|---|---|---|---|---|---|---|
| ¹Obtained from The Goodyear Tire & Rubber Company as a isoprene/butadiene copolymer elastomer having an isoprene content of about 30 percent and a Tg of about -82°C | | | | | | |
| ²Budene®1207 from The Goodyear Tire & Rubber Company | | | | | | |
| ³High vinyl polybutadiene rubber having a vinyl 1,2-content of about 77 percent and a Tg of about -30°C obtained from The Goodyear Tire & Rubber Company | | | | | | |
| ⁴Hydrated amorphous silica as HiSil®210 from PPG Industries, Inc. | | | | | | |
| ⁵Composite of 3,3'-bis(triethoxysilylpropyl) tetrasulfide and N330 carbon black in a 50/50 weight ratio as Silane®X50-S from Degussa AG | | | | | | |
| ⁶1,3-bis(citraconimidomethyl)benzene as Perkalink®900 from Flexsys America L.P. | | | | | | |

Various physical properties of the Samples of Table 1 are reported in the following Table 2.

**Table 2**

| | Samples | | | | | |
|---|---|---|---|---|---|---|
| | Control | | Control | | | |
| Properties | A | B | C | D | E | F |
| Shore A Hardness (cured at 170°C for 11 minutes) | | | | | | |
| 23°C (ASTMD-2240) | 74 | 74 | 76 | 77 | 76 | 77 |

| Dynamic Modulus (measured in compression) E' (N/mm²) at 10% compressive strain and 60 Hz, (cure at 170°C for 11 minutes) (ASTM D-5992) | | | | | | |
|---|---|---|---|---|---|---|
| 100°C | 12 | 11.9 | 14.49 | 15.67 | 14.69 | 13.94 |
| 200°C | 10.7 | 11.46 | 10.36 | 13.11 | 11.84 | 12.8 |
| Percent retained | 89.2 | 96.3 | 71.5 | 83.7 | 80.6 | 91.8 |

| Tan Delta | | | | | | |
|---|---|---|---|---|---|---|
| 100°C | 0.083 | 0.065 | 0.035 | 0.031 | 0.031 | 0.033 |
| Percent improvement versus control | 0 | 21.7 | 0 | 11.4 | 11.4 | 5.7 |
| 200°C | 0.06 | 0.037 | 0.042 | 0.024 | 0.036 | 0.027 |
| Percent improvement versus control | 0 | 38.3 | 0 | 42.9 | 14.3 | 35.7 |

The E' value at 10 percent compressive strain, namely a measure of storage modulus, as is well known to those having skill in such art, is considered herein to be a measure of stiffness, wherein an increase of E' is a corresponding indication of an increase in stiffness of the rubber composition.

The tan delta at 10 percent compressive strain, namely a ratio of loss modulus to storage modulus, as is well known to those having skill in such art, is considered herein to be a measure of hysteresis of the rubber composition wherein a lower hysteresis is desirable for low heat buildup and greater durability for the rubber composition for the sidewall insert. A decrease in the tan delta value indicates a decrease in hysteresis of the rubber composition which is desirable for the sidewall insert.

Shore A hardness measurements of Control A and its comparative Sample B as well as Control C and its comparative Samples D, E, and F illustrate that the respective Controls and comparative Samples were cured to equal hardness values.

It can be seen from Table 2 that Sample B, which replaces 40 phr of natural rubber in Control A with 40 phr of the high vinyl polybutadiene of this invention, the dynamic storage modulus or stiffness E' is 96.3 percent retained when sample B test temperature is raised from 100°C to 200°C versus only 89.2 percent retention for Control A. Likewise comparison of tan delta values for Sample B versus Control A shows that replacement of 40 phr of natural rubber with 40 phr of the high vinyl polybutadiene of this invention decreased tan delta of Sample B 21.7 percent when tested at 100°C and 38.3 percent when tested at 200°C. This is considered herein to be significant because high vinyl polybutadiene is observed to reduce heat generation within the rubber insert while substantially maintaining its stiffness as the running temperature increases.

It can further be seen from Table 2 that Sample D, which replaces 20 phr of natural rubber in Control C with 20 phr of the high vinyl polybutadiene of this invention, the dynamic storage modulus or stiffness E' is 83.7 percent retained when sample D test temperature is raised from 100°C to 200°C versus only 71.5 percent retention for Control C. Likewise comparison of tan delta values for Sample D versus Control C shows that replacement of 20 phr of natural rubber with 20 phr of the high vinyl polybutadiene of this invention decreased tan delta of Sample D 11.4 percent when tested at 100°C and 42.9 percent when tested at 200°C.

It can also be seen from Table 2 that Sample F, which replaces 36.75 phr of cis 1,4-polybutadiene in Control C with 36.75 phr of the high vinyl polybutadiene of this invention, the dynamic storage modulus or stiffness E' is 91.8 percent retained when sample F test temperature is raised from 100°C to 200°C versus only 71.5 percent retention for Control C. Likewise comparison of tan delta values for Sample F versus Control C shows that replacement of 36.75 phr of cis 1,4-polybutadiene with 36.75 phr of the high vinyl polybutadiene of this invention decreased tan delta of Sample D 5.7 percent when tested at 100°C and 35.7 percent when tested at 200°C.

These results are considered herein to be significant because of the observed reduction in heat generation within the rubber insert containing the high vinyl polybutadiene of this invention while substantially maintaining its stiffness as the running temperature increases.

## Claims

1. A substantially open toroidaly shaped pneumatic rubber tire comprised of a carcass which supports a circumferential tread designed to be ground contacting and which contains two spaced apart, relatively inextensible bead portions, and two sidewall portions which individually extend from each of said bead portions to the tire tread; wherein said sidewall contains a sidewall insert as:
(A) an apex as a strip of a rubber composition in a shape of an annular ring positioned within a carcass sidewall adjacent to a bead portion of the carcass in a primary annular direction within the sidewall portion of the carcass and a secondary radial direction extending toward and spaced apart from the tire tread, and/or;
(B) a sidewall insert as a strip of a rubber composition in a shape of an annular ring positioned within a carcass sidewall and spaced apart from a carcass bead portion in a primary annular direction within the sidewall portion of the carcass and a secondary radial direction extending toward and spaced apart from the tire tread;
**characterized in that** said rubber composition for said apex and/or sidewall insert is comprised of, based upon parts by weight of an ingredient per 100 parts by weight elastomer (phr):
(A) 50 to 80 phr of at least one diene based elastomer, and
(B) 20 to 50 phr of high vinyl polybutadiene elastomer which has a vinyl 1,2- content in a range of 40 to 80 percent;
(C) 20 to 100 phr of at least one reinforcing particulate filler selected from carbon black, aggregates of synthetic amorphous silica and silica-containing carbon having domains of silica on its surface, and, optionally
(D) a coupling agent having a moiety reactive with hydroxyl groups contained on the surface of said amorphous silica and said silica domains on the surface of said silica-containing carbon black and another moiety interactive with at least one of said elastomers.

2. The tire of claim 1, wherein said rubber composition for said sidewall insert contains a coupling agent as a bis(3-trialkoxysilylalkyl) polysulfide preferably having an average of from 2 to 2.6 or from 3.5 to 4 connecting sulfur atoms in its polysulfidic bridge, and/or wherein said reinforcing particulate filler is carbon black and is exclusive of said coupling agent.

3. The tire of claim 1 or 2, wherein said rubber composition for said sidewall insert contains a coupling agent as a bis (3-triethoxysilylpropyl) polysulfide and/or said amorphous silica is a precipitated silica.

4. The tire of at least one of the preceding claims,
wherein said carcass is comprised of at least one carcass ply extending from bead to bead, and optionally at least one belt ply extending circumferentially around said carcass and positioned between said tread and said carcass plies;
wherein said carcass plies and belt plies are individually comprised of a laminate of a rubber composition and a plurality of spaced apart cords disposed in a substantially parallel relationship to each other, wherein said rubber composition encapsulates said cords;
wherein said cords of said carcass plies and said belt plies are comprised of one or more filaments; and, optionally,
wherein said filaments are selected from brass coated steel filaments, polyester filaments, nylon filaments, aramid filaments and glass filaments.

5. The tire of any of the preceding claims, wherein said sidewall insert is a sidewall apex or a sidewall insert spaced apart from said tire bead portion.

6. The tire of any of the preceding claims, wherein the elastomers for said rubber composition for said apex and/or sidewall insert are comprised of, based upon parts by weight of an ingredient per 100 parts by weight elastomer (phr):
(A) 60 to 80 phr of at least one diene based elastomer, and
(B) 20 to 40 phr of high vinyl polybutadiene elastomer having a vinyl 1,2-content in a range of 50 to 90 percent and a Tg in a range of -10°C to -30°C and a cis 1,4- content in a range of 10 to 50 percent.

7. The tire of any of the preceding claims, wherein said diene-based elastomer(s) is comprised of at least one of cis 1,4-polyisoprene, cis 1,4-polybutadiene, styrene/butadiene copolymer, isoprene/butadiene copolymer, styrene/ isoprene/butadiene terpolymer and tin coupled elastomers selected from at least one of tin coupled organic solution prepared styrene/butadiene co-polymers, isoprene/butadiene copolymers, styrene/isoprene copolymers, polybutadiene and styrene/isoprene/butadiene terpolymers.

8. The tire of any of the preceding claims, wherein said reinforcing particulate filler for said rubber composition is carbon black and precipitated silica.
